# FASCICULE DE BREVET EUROPEEN

(11) **EP 3 419 863 B1**
(45) Date de publication et mention de la délivrance du brevet: **01.04.2020**
(21) Numéro de dépôt: 17709148.5
(22) Date de dépôt: 13.02.2017
(51) Int. Cl.: B60R 21/017

(54) **DISPOSITIF D'ANALYSE DE SIGNAUX DE COMMANDE DÉLIVRÉS PAR DES MOYENS DE CONTRÔLE D'ÉQUIPEMENT(S) DE SÉCURITÉ D'UN VÉHICULE**
VORRICHTUNG ZUR ANALYSE VON STEUERSIGNALEN DURCH VORRICHTUNG ZUR STEUERUNG VON ELEMENTEN EINER SICHERHEITSANLAGE EINES FAHRZEUGS
DEVICE FOR ANALYSING CONTROL SIGNALS DELIVERED BY MEANS FOR CONTROLLING ITEMS OF SECURITY EQUIPMENT OF A VEHICLE

(30) Priorité: 22.02.2016 FR 1651417
(43) Date de publication de la demande: 02.01.2019
(73) Titulaire: PSA Automobiles S.A., 78300 Poissy (FR)
(72) Inventeur: DE SAINT ESTEBAN, Bertrand, 25550 Dung (FR)
(86) Numéro de dépôt international: PCT/FR2017/050317
(87) Numéro de publication internationale: WO 2017/144797

(56) Documents cités:
- DE-A1- 19 814 589
- DE-A1-102011 082 688
- FR-A1- 2 557 840
- US-A1- 2015 343 975

## Description

L'invention concerne les véhicules, éventuellement de type automobile, et plus précisément ceux qui comprennent des moyens de contrôle chargés de contrôler le fonctionnement d'au moins un équipement de sécurité à déclencheur pyrotechnique.

Comme le sait l'homme de l'art, de nombreux véhicules, et notamment ceux de type automobile, comprennent au moins un équipement de sécurité à déclencheur (ou allumeur) pyrotechnique. Un tel équipement peut, par exemple, être un dispositif à sac gonflable (ou « airbag »), un actionneur de capot, un pré-tensionneur de sangle de ceinture de sécurité, un actionneur de retour de sangle, ou un dispositif de coupure d'alimentation électrique.

Le document DE1020011082688 décrit un relais comportant un coupleur optique comprenant un étage principal actionnant un circuit d'attaque de sortie), c'est-à-dire un amplificateur push-pull, en fonction d'un signal de commande (Us), reposant sur l'étage principal pour commander un étage de commutation FET. Un accumulateur d'énergie (ES1) charge les capacités de grille des transistors de commutation FET, c'est-à-dire des transistors à effet de champ à canal n, de l'étage de commutation FET afin de réduire les temps de mise sous tension sur le pilote de sortie. Le pilote de sortie décharge rapidement les capacités de grille des transistors de l'étage de commutation au coupleur optique.

Un déclencheur (ou allumeur) pyrotechnique est un dispositif qui est chargé de transformer un signal électrique de commande (généralement une impulsion) en une explosion destinée à provoquer quasi instantanément un déploiement, comme par exemple le gonflage d'un sac de sécurité ou l'extension d'un vérin, ou bien l'application d'une force, comme par exemple une pré-tension. Le signal électrique de commande (ou d'activation) est généré par des moyens de contrôle, connectés par voie filaire aux équipements de sécurité, lorsque certaines conditions sont présentes, et plus précisément lorsqu'au moins un signal de mesure, délivré par au moins un capteur (par exemple de position ou d'accélération ou de pression), présente certaines valeurs (par exemple supérieures ou inférieures à un seuil), généralement consécutivement à un freinage brutal ou à un choc.

Les équipements de sécurité revêtant une importance élevée, il est important d'effectuer pendant les phases de développement d'un nouveau véhicule des analyses destinées à déterminer si les moyens de contrôle utilisés leurs adressent à bon escient des signaux électriques de commande et si leurs déclencheurs pyrotechniques fonctionnent correctement à réception d'un signal électrique de commande.

Pour réaliser ses analyses plusieurs solutions peuvent être mises en œuvre.

Ainsi, on peut désolidariser les déclencheurs pyrotechniques de chaque équipement de sécurité pour les remplacer respectivement et localement par des charges explosives ou bien installer sur une plaque des charges explosives représentant les différents déclencheurs pyrotechniques puis connecter ces charges explosives aux moyens de contrôle, et placer la plaque sur la planche de bord pour des essais sans chauffeur ou sur le toit pour des essais avec chauffeur. Ensuite, il faut réaliser les essais destinés à tester les activations des équipements de sécurité, et vérifier après chaque essai si les charges explosives ont fonctionné ou pas.

Les différentes méthodes d'analyse présentent toutes au moins un inconvénient. En effet, la désolidarisation des déclencheurs pyrotechniques et leur remplacement par des charges explosives nécessite le démontage de parties du véhicule, tandis que l'utilisation d'une plaque sur le toit ne peut pas se faire par temps humide en raison d'un risque électrique.

Dans une première variante destinée à éviter d'avoir à réaliser les déconnexions des déclencheurs pyrotechniques, on peut regarder si des pictogrammes dédiés se sont allumés sur l'écran du tableau de bord. Hélas, l'allumage des pictogrammes s'avère peu fiable en phase de développement. En outre, cette solution s'avère onéreuse du fait que les déclencheurs pyrotechniques sont à usage unique et ont un coût relativement important. Elle n'est donc utilisée que rarement ou bien seulement pour n'effectuer qu'une partie des tests. Il est en effet rappelé que certains véhicules peuvent comporter vingt-quatre équipements de sécurité, voire plus encore.

Dans une seconde variante également destinée à éviter d'avoir à réaliser les déconnexions des déclencheurs pyrotechniques, on peut réaliser un diagnostic de fonctionnement des équipements de sécurité en couplant un boîtier de diagnostic à un calculateur du véhicule. Cette solution s'avère très fiable, mais elle nécessite une très bonne connaissance du fonctionnement de l'outil de diagnostic et s'avère chronophage et onéreuse.

L'invention a donc notamment pour but d'améliorer la situation sans consommer de déclencheur pyrotechnique.

Elle propose à cet effet un dispositif d'analyse destiné à équiper temporairement un véhicule comprenant des moyens de contrôle connectés par voie filaire à au moins un équipement de sécurité, comprenant au moins un déclencheur pyrotechnique ayant une résistance électrique, et agencés pour générer au moins un signal de commande destiné à activer ce déclencheur pyrotechnique en cas de réception d'au moins un signal de mesure, délivré par au moins un capteur et présentant certaines valeurs.

Ce dispositif d'analyse se caractérise par le fait qu'il comprend au moins un module d'analyse propre à être connecté par voie filaire aux moyens de contrôle à la place d'un équipement de sécurité correspondant et comprenant :
- un circuit d'entrée ayant une résistance électrique identique à celle du déclencheur pyrotechnique de cet équipement de sécurité correspondant,
- un circuit de sortie agencé pour délivrer un signal de sortie simulant un fonctionnement de ce déclencheur pyrotechnique correspondant en cas de réception d'un signal auxiliaire, et
- des moyens de couplage connectés de façon indépendante aux circuit d'entrée et circuit de sortie et agencés pour produire pour ce dernier le signal auxiliaire en cas de réception du signal de commande par le circuit d'entrée.

Ainsi, les moyens de contrôle se retrouvent leurrés et peuvent fonctionner normalement, sans être perturbés. Cela permet de vérifier facilement et à moindre coût si les signaux de commande qu'ils génèrent induisent des déclenchements intempestifs d'équipements de sécurité, y compris en présence d'importantes sollicitations lors de chocs (fort claquage de porte, montée de bordure de trottoir, roulage sur route dégradée ou déformée (volontairement ou involontairement)) ou lors de très forts freinages.

Le dispositif d'analyse selon l'invention peut comporter d'autres caractéristiques qui peuvent être prises séparément ou en combinaison, et notamment :
- les moyens de couplage peuvent comprendre un photocoupleur (ou (optocoupleur) ;
- le circuit de sortie peut comprendre, d'une part, un circuit logique propre à être placé dans un premier état stable dans lequel il délivre de façon continue un signal de sortie en cas de réception du signal auxiliaire, et, d'autre part, une diode électroluminescente agencée pour délivrer un signal de type lumineux en cas de réception de ce signal de sortie ;
   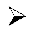 le circuit logique peut être propre à être placé dans un second état stable dans lequel il ne délivre plus le signal de sortie en cas de réception d'un signal de remise à zéro ;
- le circuit de sortie peut comprendre des moyens de stockage agencés pour stocker une information représentative du signal de sortie ;
- le circuit d'entrée peut comprendre deux composants résistifs montés en parallèle et ayant une résistance électrique équivalente identique à celle d'un déclencheur pyrotechnique correspondant ;
- le circuit d'entrée peut comprendre un commutateur propre à déconnecter son module d'analyse lorsqu'il n'est pas utilisé ;
- il peut comprendre au moins deux modules d'analyse propres à être connectés par voie filaire aux moyens de contrôle à la place d'au moins deux équipements de sécurité correspondants ;
- il peut être propre à analyser le contrôle desdits moyens de contrôle sur au moins un équipement de sécurité choisi parmi (au moins) un dispositif à sac gonflable, un actionneur de capot, un pré-tensionneur de sangle de ceinture de sécurité, un actionneur de retour de sangle, et un dispositif de coupure d'alimentation électrique ;
- il peut être propre à analyser le contrôle de moyens de contrôle d'un véhicule de type automobile.

D'autres caractéristiques et avantages de l'invention apparaîtront à l'examen de la description détaillée ci-après, et des dessins annexés, sur lesquels :
- la figure 1 illustre schématiquement et fonctionnellement un véhicule comprenant des moyens de contrôle auxquels sont couplés des capteurs, des équipements de sécurité et un équipement de supervision,
- la figure 2 illustre schématiquement et fonctionnellement le véhicule de la figure 1 après déconnexion de ses équipements de sécurité de ses moyens de contrôle et connexion d'un exemple de réalisation d'un dispositif d'analyse selon l'invention à ses moyens de contrôle, et
- la figure 3 illustre schématiquement et fonctionnellement un exemple de réalisation d'un module d'analyse du dispositif d'analyse de la figure 2.

L'invention a notamment pour but de proposer un dispositif d'analyse DA destiné à analyser le contrôle de moyens de contrôle MC1 d'un véhicule V sur au moins un équipement de sécurité ESj faisant partie de ce dernier (V).

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comprenant des moyens de contrôle chargés de contrôler le fonctionnement d'au moins un équipement de sécurité à déclencheur pyrotechnique. Par conséquent, elle concerne les véhicules terrestres, maritimes (ou fluviaux), et aériens.

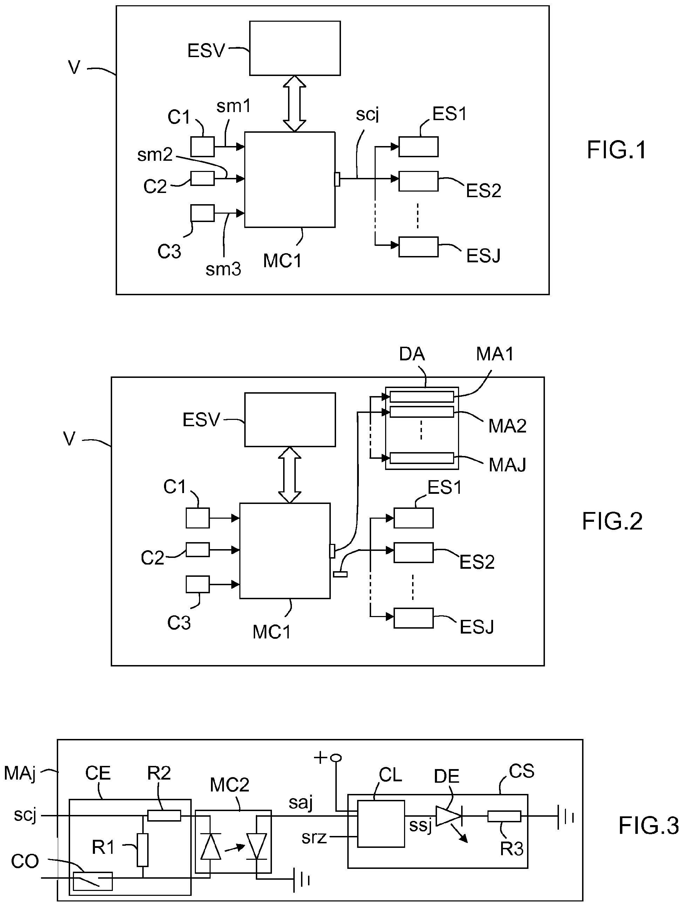

On a schématiquement représenté sur la figure 1 un véhicule V comprenant des moyens de contrôle MC1 auxquels sont couplés des capteurs Ck délivrant respectivement des signaux de mesure smk, des équipements de sécurité ESj à déclencheur pyrotechnique, et un équipement de supervision ESV.

Les moyens de contrôle MC1 sont connectés par voie filaire à au moins un équipement de sécurité ESj. Ils sont agencés pour générer au moins un signal de commande scj destiné à activer le déclencheur pyrotechnique de cet équipement de sécurité ESj en cas de réception d'au moins un signal de mesure smk, délivré par au moins un capteur Ck et présentant certaines valeurs (par exemple supérieures ou inférieures à un seuil. A titre d'exemple, ils peuvent être agencés sous la forme d'un calculateur logé dans un boîtier et couplé, d'une part, à au moins un équipement de sécurité ESj via au moins un câble électrique (par exemple du faisceau électrique), et, d'autre part, à l'équipement de supervision ESV, par exemple via un réseau de communication du véhicule V, éventuellement de type CAN (« Controller Area Network »).

Dans l'exemple illustré non limitativement sur la figure 1, les capteurs Ck sont au nombre de trois (k = 1 à 3). Par exemple, un premier capteur C1 peut délivrer des signaux de mesure sm1 représentatifs d'une position, un deuxième capteur C2 peut délivrer des signaux de mesure sm2 représentatifs d'une accélération, et un troisième capteur C3 peut délivrer des signaux de mesure sm3 représentatifs d'une pression. Mais le nombre de capteurs Ck peut prendre n'importe quelle valeur supérieure ou égale à un.

On notera que les signaux de mesure smk peuvent être fournis aux moyens de contrôle MC1 via un faisceau électrique du véhicule V ou via le réseau de communication du véhicule V.

Egalement dans l'exemple illustré non limitativement, le véhicule V comprend J équipements de sécurité ES1 à ESJ (j = 1 à J, avec J ≥ 1), tous connectés par voie filaire aux moyens de contrôle MC1. Par exemple J = 10. Mais le nombre d'équipements de sécurité ESj peut prendre n'importe quelle valeur supérieure ou égale à un.

Par exemple, et notamment dans le cas d'un véhicule de type automobile, chaque équipement de sécurité ESj peut être choisi parmi au moins un dispositif à sac gonflable (ou airbag), un actionneur de capot, un pré-tensionneur de sangle de ceinture de sécurité, un actionneur de retour de sangle, et un dispositif de coupure d'alimentation électrique (destiné à couper l'alimentation du véhicule V par des batteries lorsque ce dernier (V) est de type hybride.

Le déclencheur pyrotechnique de chaque équipement de sécurité ESj présente une résistance électrique rej qui est connue des moyens de contrôle MC1.

L'équipement de supervision ESV est ce que l'homme de l'art appelle parfois le « boîtier de servitude intelligent » (ou BSI). Il s'agit d'un équipement électronique communicant qui est notamment chargé d'assurer l'interfaçage, via un réseau de communication, entre d'autres équipements électroniques communicants, de contrôler des fonctionnalités de diagnostic, de déclencher un éventuel dispositif d'alerte et de géolocalisation (ou « e-call »), et de piloter des relais d'alimentation électrique d'équipements du véhicule V qui sont connectés à un réseau de communication de ce dernier (V).

Comme illustré non limitativement sur la figure 2, l'invention propose d'installer temporairement dans le véhicule V, pendant une phase de test, un dispositif d'analyse DA destiné à analyser le contrôle réalisé par les moyens de contrôle MC1 sur au moins un équipement de sécurité ESj. On comprendra qu'en présence de J équipements de sécurité ES1 à ESJ, le dispositif d'analyse DA analyse le contrôle réalisé par les moyens de contrôle MC1 sur ces J équipements de sécurité ES1 à ESJ.

Un dispositif d'analyse DA, selon l'invention, comprend au moins un module d'analyse MAj propre à être connecté par voie filaire aux moyens de contrôle MC1 à la place d'un équipement de sécurité ESj correspondant. On comprendra qu'en présence de J équipements de sécurité ES1 à ESJ, le dispositif d'analyse DA comprend J modules d'analyse MA1 à MAJ propres à être connectés par voie filaire aux moyens de contrôle MC1 à la place respectivement de ces J équipements de sécurité ES1 à ESJ. Ces modules d'analyse MAj peuvent, par exemple, être tous logés dans un boîtier muni d'au moins un connecteur à entrées multiples.

La connexion de chaque module d'analyse MAj aux moyens de contrôle MC1, à la place de l'équipement de sécurité ESj correspondant, se fait en déconnectant chaque câble électrique d'interconnexion de ce dernier (ESj) au niveau du connecteur des moyens de contrôle MC1, puis en connectant à la place chaque câble électrique d'interconnexion du module d'analyse MAj considéré.

Comme illustré non limitativement sur la figure 3, chaque module d'analyse MAj comprend un circuit d'entrée CE, un circuit de sortie CS, et des moyens de couplage MC2.

Le circuit d'entrée CE de chaque module d'analyse MAj a une résistance électrique rej qui est identique à celle du déclencheur pyrotechnique de l'équipement de sécurité ESj correspondant. L'objectif est en effet de substituer la résistance électrique rej connue de chaque déclencheur pyrotechnique par un composant résistif ayant cette même résistance électrique rej, afin de leurrer les moyens de contrôle MC1 pour qu'ils déterminent normalement un signal de commande scj pour l'équipement de sécurité ESj lorsque cela s'impose. La résistance électrique rej est généralement petite. Typiquement elle est de l'ordre de quelques ohms (par exemple environ 3 ohms).

Par exemple, et comme illustré non limitativement sur la figure 3, chaque circuit d'entrée CE peut comprendre une borne d'entrée couplée aux moyens de contrôle MC1 et à laquelle sont connectés deux composants résistifs R1 et R2 montés en parallèle et ayant une résistance électrique équivalente rej identique à celle du déclencheur pyrotechnique de l'équipement de sécurité ESj correspondant. Le composant résistif R1 peut, par exemple, être une simple résistance.

Le composant résistif R2 est monté en série entre la borne d'entrée et les moyens de couplage MC2. Il est chargé de réduire la tension pour qu'elle soit adaptée aux moyens de couplage MC2. Cet autre composant résistif R2 peut être une simple résistance ou bien un composant électronique, comme par exemple un transistor. Sa résistance est typiquement de l'ordre d'un kilo ohms (mais dépend des moyens de couplage MC2 utilisés).

On notera également, comme illustré non limitativement sur la figure 3, que chaque circuit d'entrée CE peut également comprendre un commutateur CO propre à déconnecter son module d'analyse MAj lorsqu'il n'est pas utilisé (ce qui dépend du niveau d'équipement du véhicule). Par exemple, le dispositif d'analyse DA peut comprendre pour chaque module d'analyse MAj un circuit comprenant un organe de commande qui, lorsqu'il est actionné par un usager, génère le signal de déconnexion sd à destination du commutateur CO du module d'analyse MAj concerné. Mais en variante, chaque commutateur peut être actionné manuellement.

Cette option est destinée à permettre une configuration du dispositif d'analyse DA en fonction du véhicule à analyser. On comprendra en effet qu'un dispositif d'analyse DA comprenant de (très) nombreux modules d'analyse MAj peut être adapté (ou configuré) en fonction des besoins pour le véhicule V considéré et le test considéré.

Les moyens de couplage MC2 de chaque module d'analyse MAj sont connectés de façon indépendante au circuit d'entrée CE et au circuit de sortie CS et sont agencés pour produire pour ce dernier (CS) un signal auxiliaire saj en cas de réception du signal de commande scj par le circuit d'entrée CE. Cette double connexion indépendante aux circuits d'entrée CE et de sortie CS permet avantageusement de transmettre un signal de l'un à l'autre sans qu'il y ait de contact galvanique entre eux, et ainsi de ne pas induire de modification de la résistance électrique totale rej détectée par les moyens de contrôle MC1.

Par exemple, et comme illustré non limitativement sur la figure 3, les moyens de couplage MC2 peuvent comprendre un photocoupleur (ou optocoupleur). Un tel photocoupleur peut comprendre un photoémetteur connecté au circuit d'entrée CE et un photorécepteur connecté au circuit de sortie CS. Le photoémetteur comporte une diode électroluminescente agencée de manière à émettre de la lumière selon une certaine intensité lorsqu'elle reçoit le signal de commande scj du circuit d'entrée CE (et plus précisément, ici, de la « sortie » du composant résistif R2). Le photorécepteur peut, par exemple, comprendre une photodiode propre à générer le signal auxiliaire saj lorsqu'elle reçoit la lumière émise, selon la certaine intensité, par la diode électroluminescente. En variante, le photorécepteur pourrait comprendre un phototransistor.

Mais d'autres types de moyens de couplage MC2 sans contact galvanique pourraient être utilisés.

Le circuit de sortie CS de chaque module d'analyse MAj est agencé pour délivrer (et de préférence mémoriser) un signal de sortie ssj qui simule le fonctionnement du déclencheur pyrotechnique de l'équipement de sécurité ESj correspondant en cas de réception d'un signal auxiliaire saj.

En d'autres termes, lorsque le circuit de sortie CS d'un module d'analyse MAj délivre son signal de sortie ssj cela signifie que les moyens de contrôle MC1 ont transmis audit module d'analyse MAj un signal de commande scj correct, c'est-à-dire propre à activer le déclencheur pyrotechnique du déclencheur pyrotechnique de l'équipement de sécurité ESj correspondant. En revanche, lorsque le circuit de sortie CS d'un module d'analyse MAj ne délivre pas son signal de sortie ssj cela signifie que les moyens de contrôle MC1 n'ont pas transmis audit module d'analyse MAj un signal de commande scj ou bien ont transmis audit module d'analyse MAj un signal de commande scj incorrect, c'est-à-dire impropre à activer le déclencheur pyrotechnique du déclencheur pyrotechnique de l'équipement de sécurité ESj correspondant.

Par exemple, et comme illustré non limitativement sur la figure 3, chaque circuit de sortie CS peut comprendre un circuit logique CL et une diode électroluminescente DE montés en série. Le circuit logique CL est propre à être placé dans un premier état stable dans lequel il délivre de façon continue un signal de sortie ssj en cas de réception du signal auxiliaire saj. La diode électroluminescente DE est agencée pour délivrer un signal de type lumineux en cas de réception du signal de sortie ssj généré par le circuit logique CL associé. On comprendra qu'avec un tel mode de réalisation, une fois que le circuit logique CL a été placé dans son premier état stable, la diode électroluminescente DE délivre en continu un signal lumineux. Par conséquent, une simple observation visuelle du dispositif d'analyse DA permet à l'usager de voir que son module d'analyse MAj a été utilisé.

On notera que pour faciliter cette observation, le boîtier qui comprend le(s) module(s) d'analyse MAj peut comporter une face avant munie de trou(s) placé(s) au-dessus de la (des) diode(s) électroluminescente(s) DE, et sur laquelle est (sont) inscrite(s) une (des) inscription(s) représentative(s) de(s) équipement(s) de sécurité ESj correspondant(s).

On notera également, comme illustré non limitativement sur la figure 3, que chaque diode électroluminescente DE peut être montée en série avec un composant résistif R3 destiné à limiter l'intensité du courant qu'elle reçoit. Ce composant résistif R3 peut être une simple résistance ou bien un composant électronique, comme par exemple un transistor.

Egalement comme illustré non limitativement sur la figure 3, chaque circuit logique CL peut être alimenté par une source d'alimentation adaptée. Cette source peut être une batterie (ou pile) interne du dispositif d'analyse DA (logée dans son boîtier), ou bien une batterie basse tension du véhicule V (ce qui nécessite un couplage additionnel).

On notera également que le circuit logique CL peut être propre à être placé dans un second état stable dans lequel il ne délivre plus le signal de sortie ssj en cas de réception d'un signal de remise à zéro srz fourni par le dispositif d'analyse DA. A cet effet ce dernier (DA) peut comprendre pour chaque module d'analyse MAj un circuit comprenant un organe de commande qui, lorsqu'il est actionné par un usager, génère le signal de remise à zéro srz à destination du circuit logique CL du module d'analyse MAj concerné. En variante, le dispositif d'analyse DA peut comprendre un circuit de remise à zéro commun à chacun des modules d'analyse MAj et comprenant un organe de commande qui, lorsqu'il est actionné par un usager, génère un signal de remise à zéro srz à destination de chaque circuit logique CL de chaque module d'analyse MAj, de manière à induire une remise à zéro générale.

Dans une variante de réalisation, éventuellement combinable avec le mode de réalisation lumineux décrit ci-avant, le circuit de sortie CS de chaque module d'analyse MAj peut comprendre des moyens de stockage agencés pour stocker une information représentative du signal de sortie ssj. Cette information peut éventuellement être stockée en correspondance d'une information temporelle représentative de l'instant de génération du signal de sortie ssj. L'usager peut alors procéder à une analyse des informations stockées à la fin d'un test en couplant une sortie du dispositif d'analyse DA, par ailleurs couplée à ses moyens de stockage d'informations, à un équipement électronique comprenant des moyens de traitement et un écran, comme par exemple un ordinateur (éventuellement portable) ou une tablette électronique.

L'invention offre plusieurs avantages, parmi lesquels :
- une facilité d'installation temporaire dans un véhicule,
- une facilité d'emploi,
- une adaptation facile à réaliser en fonction des besoins,
- une fiabilité des résultats d'analyse,
- une mémorisation des résultats d'analyse,
- un coût relativement faible et très vite amorti au regard du coût des déclencheurs pyrotechniques.

## Revendications

1. Dispositif d'analyse (DA) pour un véhicule (V) comprenant des moyens de contrôle (MC1) connectés par voie filaire à au moins un équipement de sécurité (ESj), comprenant au moins un déclencheur pyrotechnique ayant une résistance électrique, et agencés pour générer au moins un signal de commande destiné à activer ledit déclencheur pyrotechnique en cas de réception d'au moins un signal de mesure, délivré par au moins un capteur (Ck) et présentant certaines valeurs, **caractérisé en ce qu'**il comprend au moins un module d'analyse (MAj) propre à être connecté par voie filaire auxdits moyens de contrôle (MC1) à la place d'un équipement de sécurité (ESj) correspondant et comprenant i) un circuit d'entrée (CE) ayant une résistance électrique identique à celle du déclencheur pyrotechnique de cet équipement de sécurité (ESj), ii) un circuit de sortie (CS) agencé pour délivrer un signal de sortie simulant un fonctionnement de ce déclencheur pyrotechnique en cas de réception d'un signal auxiliaire, et iii) des moyens de couplage (MC2) connectés de façon indépendante auxdits circuit d'entrée (CE) et circuit de sortie (CS) et agencés pour produire pour ce dernier (CS) ledit signal auxiliaire en cas de réception dudit signal de commande par ledit circuit d'entrée (CE), lesdits moyens de couplage (MC2) comprennent un photocoupleur, et **en ce que** ledit circuit d'entrée (CE) comprend deux composants résistifs (R1, R2) montés en parallèle et ayant une résistance électrique équivalente identique à celle d'un déclencheur pyrotechnique correspondant.

2. Dispositif selon la revendication 1, **caractérisé en ce que** ledit circuit de sortie (CS) comprend i) un circuit logique (CL) propre à être placé dans un premier état stable dans lequel il délivre de façon continue un signal de sortie en cas de réception dudit signal auxiliaire, et ii) une diode électroluminescente (DE) agencée pour délivrer un signal de type lumineux en cas de réception dudit signal de sortie.

3. Dispositif selon la revendication 2, **caractérisé en ce que** ledit circuit logique (CL) est propre à être placé dans un second état stable dans lequel il ne délivre plus ledit signal de sortie en cas de réception d'un signal de remise à zéro.

4. Dispositif selon l'une des revendications 1 à 3, **caractérisé en ce que** ledit circuit de sortie (CS) comprend des moyens de stockage agencés pour stocker une information représentative dudit signal de sortie.

5. Dispositif selon l'une des revendications 1 à 4, **caractérisé en ce que** ledit circuit d'entrée (CE) comprend un commutateur (CO) propre à déconnecter son module d'analyse (MAj) lorsqu'il n'est pas utilisé.

6. Dispositif selon l'une des revendications 1 à 5, **caractérisé en ce qu'**il comprend au moins deux modules d'analyse (MAj) propres à être connectés par voie filaire auxdits moyens de contrôle (MC1) à la place d'au moins deux équipements de sécurité (ESj) correspondants.

7. Dispositif selon l'une des revendications 1 à 6, **caractérisé en ce qu'**il est propre à analyser le contrôle desdits moyens de contrôle (MC1) sur au moins un équipement de sécurité (ESj) choisi dans un groupe comprenant un dispositif à sac gonflable, un actionneur de capot, un pré-tensionneur de sangle de ceinture de sécurité, un actionneur de retour de sangle, et un dispositif de coupure d'alimentation électrique.

8. Dispositif selon l'une des revendications 1 à 7, **caractérisé en ce qu'**il est propre à analyser le contrôle de moyens de contrôle (MC1) d'un véhicule (V) de type automobile.

## Patentansprüche

1. Analysevorrichtung (DA) für ein Fahrzeug (V), die Steuermittel (MC1) umfasst, die verdrahtet mit mindestens einer Sicherheitsanlage (ESj) verbunden sind, die mindestens einen pyrotechnischen Auslöser umfasst, der einen elektrischen Widerstand aufweist, und die eingerichtet sind, um mindestens ein Steuersignal zu erzeugen, das dazu bestimmt ist, den pyrotechnischen Auslöser in dem Fall zu aktivieren, dass mindestens ein Messsignal empfangen wird, das durch mindestens einen Sensor (Ck) geliefert wird und bestimmte Werte aufweist, **dadurch gekennzeichnet, dass** sie mindestens ein Analysemodul (MAj) umfasst, das geeignet ist, verdrahtet mit den Steuermitteln (MC1) an der Stelle einer entsprechenden Sicherheitsanlage (ESj) verbunden zu sein und i) eine Eingangsschaltung (CE) umfasst, die einen elektrischen Widerstand aufweist, der mit dem des pyrotechnischen Auslösers dieser Sicherheitsanlage (ESj) identisch ist, ii) eine Ausgangsschaltung (CS), die eingerichtet ist, um ein Ausgangssignal zu liefern, das einen Betrieb dieses pyrotechnischen Auslösers in dem Fall des Empfangs eines Hilfssignals simuliert, und iii) Kopplungsmittel (MC2), die unabhängig mit der Eingangsschaltung (CE) und der Ausgangsschaltung (CS) verbunden und eingerichtet sind, um für diese Letztere (CS) das Hilfssignal in dem Fall des Empfangs des Steuersignals durch die Eingangsschaltung (CE) zu erzeugen, wobei die Kopplungsmittel (MC2) einen Fotokoppler umfassen, und dass die Eingangsschaltung (CE) zwei resistive Bauteile (R1, R2) umfasst, die parallel geschaltet sind und einen äquivalenten elektrischen Widerstand aufweisen, der mit dem eines entsprechenden pyrotechnischen Auslösers identisch ist.

2. Vorrichtung nach Anspruch 1, **dadurch gekennzeichnet, dass** die Ausgangsschaltung (CS) i) eine Logikschaltung (CL) umfasst, die geeignet ist, auf einen ersten stabilen Zustand gestellt zu werden, in dem sie kontinuierlich ein Ausgangssignal in dem Fall des Empfangs des Hilfssignals liefert, und ii) eine Licht emittierende Diode (DE), die eingerichtet ist, um ein Signal vom Lichttyp in dem Fall des Empfangs des Ausgangssignals zu liefern.

3. Vorrichtung nach Anspruch 2, **dadurch gekennzeichnet, dass** die Logikschaltung (CL) geeignet ist, auf einen zweiten stabilen Zustand gestellt zu werden, in dem sie das Ausgangssignal in dem Fall des Empfangs eines Signals zur Zurückstellung auf null nicht mehr liefert.

4. Vorrichtung nach einem der Ansprüche 1 bis 3, **dadurch gekennzeichnet, dass** die Ausgangsschaltung (CS) Speichermittel umfasst, die eingerichtet sind, um eine Information, die für das Ausgangssignal repräsentativ ist, zu speichern.

5. Vorrichtung nach einem der Ansprüche 1 bis 4, **dadurch gekennzeichnet, dass** die Eingangsschaltung (CE) einen Umschalter (CO) umfasst, der geeignet ist, sein Analysemodul (MAj) zu trennen, falls es nicht verwendet wird.

6. Vorrichtung nach einem der Ansprüche 1 bis 5, **dadurch gekennzeichnet, dass** sie mindestens zwei Analysemodule (MAj) umfasst, die geeignet sind, verdrahtet mit den Steuermitteln (MC1) an Stelle von mindestens zwei entsprechenden Sicherheitsanlagen (ESj) verbunden zu sein.

7. Vorrichtung nach einem der Ansprüche 1 bis 6, **dadurch gekennzeichnet, dass** sie geeignet ist, die Steuerung der Steuermittel (MC1) auf mindestens einer Sicherheitsanlage (ESj), die aus einer Gruppe ausgewählt ist, die eine Vorrichtung mit aufblasbarem Sack, einen Motorhaubenaktuator, einen Sicherheitsgurtvorspanner, einen Gurtrückstellaktuator und eine Vorrichtung zum Abschalten der Stromversorgung umfasst, zu analysieren.

8. Vorrichtung nach einem der Ansprüche 1 bis 7, **dadurch gekennzeichnet, dass** sie geeignet ist, die Steuerung von Steuermitteln (MC1) eines Fahrzeugs (V) vom Kraftfahrzeugtyp zu analysieren.

## Claims

1. An analysis device (DA) for a vehicle (V) including control means (MC1) connected by wire to at least one item of security equipment (ESj), including at least one pyrotechnic trigger having an electrical resistance, and arranged to generate at least one control signal intended to activate said pyrotechnic trigger in the event of reception of at least one measurement signal, delivered by at least one sensor (Ck) and having certain values, **characterized in that** it includes at least one analysis module (MAj) suitable to be connected by wire to said control means (MC1) in the place of a corresponding item of security equipment (ESj) and including i) an input circuit (CE) having an electrical resistance identical to that of the pyrotechnic trigger of this item of security equipment (ESj), ii) an output circuit (CS) arranged to deliver an output signal simulating an operation of this pyrotechnic trigger in the event of reception of an auxiliary signal, and iii) coupling means (MC2) connected independently to said input circuit (CE) and output circuit (CS) and arranged to produce for the latter (CS) said auxiliary signal in the event of reception of said control signal by said input circuit (CE), said coupling means (MC2) include a photocoupler, and **in that** said input circuit (CE) includes two resistive components (R1, R2) mounted in parallel and having an equivalent electrical resistance identical to that of a corresponding pyrotechnic trigger.

2. The device according to Claim 1, **characterized in that** said output circuit (CS) includes i) a logic circuit (CL) suitable to be placed in a first stable state in which it delivers continuously an output signal in the event of reception of said auxiliary signal, and ii) a light-emitting diode (DE) arranged to deliver a signal of the luminous type in the event of reception of said output signal.

3. The device according to Claim 2, **characterized in that** said logic circuit (CL) is suitable to be placed in a second stable state in which it no longer delivers said output signal in the event of reception of a signal of reset to zero.

4. The device according to one of Claims 1 to 3, **characterized in that** said output circuit (CS) includes storage means arranged for storing information representative of said output signal.

5. The device according to one of Claims 1 to 4, **characterized in that** said input circuit (CE) includes a switch (CO) suitable to disconnect its analysis module (MAj) when it is not used.

6. The device according to one of Claims 1 to 5, **characterized in that** it includes at least two analysis modules (MAj) suitable to be connected by wire to said control means (MC1) in the please of at least two corresponding items of security equipment (ESj) .

7. The device according to one of Claims 1 to 6, **characterized in that** it is suitable to analyse the control of said control means (MC1) on at least one item of security equipment (ESj) selected from a group including an airbag device, a bonnet actuator, a safety belt webbing pretensioner, a belt return actuator, and a device for cutting electrical supply.

8. The device according to one of Claims 1 to 7, **characterized in that** it is suitable for analysing the control of control means (MC1) of a vehicle (V) of the automobile type.
